# EUROPEAN PATENT SPECIFICATION

(11) **EP 4 238 742 B1**
(45) Date of publication and mention of the grant of the patent: **11.11.2026**
(21) Application number: 23158073.9
(22) Date of filing: 22.02.2023
(51) Int. Cl.: B29C 64/118, B29C 64/209, B29C 64/227, B33Y 10/00, B33Y 30/00, B33Y 70/10

(54) **METHODS FOR COMPOSITE COMPONENT MANUFACTURING**
VERFAHREN ZUR HERSTELLUNG VON VERBUNDKOMPONENTEN
PROCÉDÉS DE FABRICATION DE COMPOSANTS COMPOSITES

(30) Priority: 02.03.2022 US 202217684543
(43) Date of publication of application: 06.09.2023
(73) Proprietor: Goodrich Corporation, Charlotte, NC 28217-4578 (US)
(72) Inventor: MIRONETS, Sergey, Charlotte (US); POLICANDRIOTES, Tod, Suffield (US)
(74) Representative: Dehns

(56) References cited:
- EP-A1- 3 912 800
- US-A1- 2016 046 073
- US-A1- 2021 308 937
- US-A1- 2021 316 500

## Description

### TECHNICAL FIELD

The present disclosure relates generally to additive manufacturing methods and, more particularly, to methods for additive manufacturing of composite components.

### BACKGROUND

Various components, for instance, vehicle components, are manufactured from composite materials. Traditional composite manufacturing techniques includes laying up layers of resin-soaked fiber on a mold, compressing the layered structure to diminish voids, and allowing the structure to cure. Subsequently, various processing techniques may be utilized to shape the cured combination of resin and fiber. Additive manufacturing techniques have accelerated the speed and increased the ready prototyping of other types of components. However, these techniques have difficulty processing composite materials, limiting the availability of additive manufacturing technology when constructing components from composite materials.

US 2021/308937 A1 discloses a method comprising forming a conductive 3D object by depositing a conductive polymer or a plastic composition as a conductive coating or layer in a multi-component part, feeding the at least one conductive filler and the at least one polymer or plastic through a hollow spindle or tool of a solid-state additive manufacturing machine; and generating severe plastic deformation of the at least one conductive filler and the at least one polymer or plastic by applying forces by way of a rotating shoulder of the hollow tool such that the at least one conductive filler and/or the at least one polymer or plastic are in a malleable and/or visco-elastic state in an interface region.

US 2021/316500 A1 discloses an extrusion system including an extruder screw housed in a barrel, a nozzle heater coupled to the barrel, a printing nozzle coupled to the nozzle heater, and a randomizing element at least partially in the printing nozzle. The randomizing element is configured to randomize the orientation of fiber elements and/or fillers in an extrusion melt traveling through the extrusion system.

### SUMMARY

From a first aspect of the invention, a method of additively manufacturing a composite component is provided. The method includes introducing a polymer into a probe. The method includes introducing a fiber into the probe. The method includes mixing the polymer and the fiber by a screw feeder disposed inside the probe to form a fiber-matrix mixture and extruding the fiber-matrix mixture from a nozzle of the probe to provide an extruded fiber-matrix body at the nozzle of the probe. The method further includes contacting the extruded fiber-matrix body to a workpiece supported by a build plate. The extruded fiber-matrix body at least partially hardens prior to the contacting the extruded fiber-matrix body to the workpiece. The method further includes moving the extruded fiber-matrix body relative to the workpiece to friction-stir additively manufacture a layer of the workpiece from the extruded fiber-matrix body by incorporating at least a portion of the extruded fiber-matrix body integrally into the workpiece to form the composite component.

In various instances the fiber is chopped carbon fiber. The moving the extruded fiber-matrix body relative to the workpiece may include translating the build plate supporting the workpiece relative to the probe. The moving the extruded fiber-matrix body relative to the workpiece may include translating the probe relative to the build plate supporting the workpiece. The moving the extruded fiber-matrix body relative to the workpiece may include rotating the probe relative to the workpiece. The moving the extruded fiber-matrix body relative to the workpiece may include rotating the probe relative to the workpiece while translating the build plate supporting the workpiece relative to the probe. The moving the extruded fiber-matrix body relative to the workpiece may include rotating the probe relative to the workpiece while translating the probe relative to the build plate supporting the workpiece.

**In** various embodiments, at least one of the contacting and the moving generates heat causing the extruded fiber-matrix body and the workpiece to at least partially melt and weld together. Moreover, the method may include repeating the moving the extruded fiber-matrix body relative to the workpiece to friction-stir additively manufacture a subsequent layer atop the layer. The composite component may be a structural component of an aircraft.

Finally, from a still further aspect, the invention provides a method of additively manufacturing a composite component by an additive manufacturing system as claimed in claim 10.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a perspective view of a manufacturing system for additive manufacturing of composite components, in accordance with various embodiments;
FIG. 2 illustrates a cross-sectional view of a probe for the manufacturing system, in accordance with various embodiments;
FIG. 3 illustrates a friction stir additive manufacturing process utilized by the manufacturing system, in accordance with various embodiments; and
FIG. 4 illustrates a flow chart of a method of additive manufacturing using the manufacturing system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Frequently, components are desired to be manufactured from composite materials. However, prior additive manufacturing techniques involve the squeezing of molten polymers in a layer by layer fashion, building up a part. During melting, discontinuities arise or debonding occurs between the fibers and the matrix material. Other prior manufacturing techniques involve non-additive manufacturing technologies, such as layer-by-layer manual lay up of fiber mats in the matrix, followed by application of compression during curing. Such techniques are time intensive and lack the flexibility of additive manufacturing technologies.

Systems, methods, and apparatuses are disclosed herein to implement friction stir additive manufacturing for the manufacturing of composite components. These systems, methods, and apparatuses overcome the limitations of prior techniques by making available the speed and flexibility of additive manufacturing technology without the associated discontinuities and debonding arising between fibers and the matrix during melting processes. Consequently, bonding of fiber and matrix retains resiliency similar to or better than traditional composite manufacturing processes, while enjoying the speed and flexibility of additive manufacturing processes. As a result, composite components manufactured as provided herein may be utilized as structural components of aircraft and other vehicles.

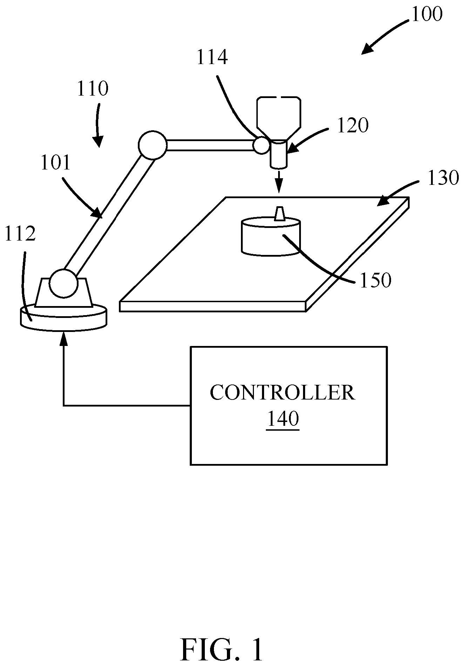

Referring now to FIG. 1, a perspective view of a manufacturing system for additive manufacturing 100 to manufacture a composite component (workpiece 150) is illustrated in accordance with various embodiments. The manufacturing system 100 may comprise a mechanical arm 110, a probe 120, a build plate 130, and a controller 140. In various embodiments, the mechanical arm 110 extends from a fixed end 112 to a moveable end 114. The probe 120 is coupled to the moveable end 114 and configured to move with the moveable end 114. In various embodiments, an actuator of the mechanical arm 110 and/or an actuator of the build plate 130 is in electrical (or wireless) communication with a controller 140 configured to control a position of the mechanical arm 110 and/or the build plate 130 during additive manufacturing. Thus, the controller 140 may be operable to control an actuator that moves the mechanical arm 110 and/or an actuator that moves the build plate 130 in accordance with a computer instruction. In this regard, the mechanical arm 110 may comprise a 6-axis robotic arm, in accordance with various embodiments. Although illustrated as a six axis robotic arm, the mechanical arm 110 is not limited in this regard. For example, a three-axis gantry system is within the scope of this disclosure. In various embodiments, the mechanical arm 110 is fixed and the build plate 130 moves. In further embodiments, both the mechanical arm 110 and the build plate 130 may move.

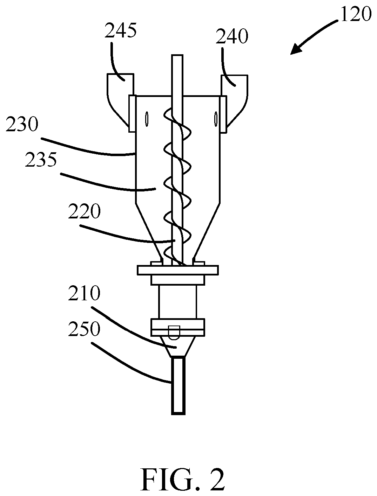

Directing attention to FIG. 2, a more detailed cross-sectional view of the probe 120 is provided. The probe 120 may comprise a variety of aspects configured to facilitate additive manufacturing with a composite material. For instance, the probe 120 includes a sleeve 230 defining a cavity 235. The sleeve 230 may provide an area for the holding of various input materials to the additive manufacturing process. The sleeve 230 may hold the input material in the cavity 235.

For instance, the sleeve 230 may hold a combination of a (i) matrix material and (ii) a fiber material. In various embodiments, the matrix material may be a resin and/or a polymer material. In various embodiments, the fiber material may be carbon fiber, fiberglass, aramid fiber, or the like. In various instances, the fiber material is short chopped carbon fiber. The fiber material may be provided to the cavity 235 by feeding from a spool, or may be provided in short, chopped configuration.

The probe 120 may also have a first inlet duct 240. The first inlet duct 240 may be in fluid communication with the cavity 235 and may receive at least a portion of the fiber-matrix mixture and admit the portion of the fiber-matrix mixture to the cavity 235.

In various instances, the first inlet duct 240 of the probe 120 provides both matrix and fiber to the cavity 235. However, in further instances, a second inlet duct 245 is provided. The second inlet duct 245 may be in fluid communication with the cavity 235 and may receive at least a portion of the fiber-matrix mixture and admit the portion of the fiber-matrix mixture to the cavity 235. For instance, the first inlet duct 240 may admit matrix to the cavity 235 and the second inlet duct 245 may admit fiber to the cavity 235. The matrix may be a polymer and the fiber may be a chopped carbon fiber.

The probe 120 has a screw feeder 220. The screw feeder 220 may comprise an auger. The screw feeder 220 is disposed at least partially within the sleeve 230. The screw feeder 220 may agitate the fiber-matrix mixture in the cavity 235 to facilitate mixing and even distribution of the fiber throughout the matrix. The screw feeder 220 may cause the fiber-matrix mixture to flow from the cavity 235 toward a nozzle 210 disposed at an end of the sleeve 230 for extrusion therefrom. Thus, the screw feeder 220 may be configured to rotate causing the fiber-matrix mixture to translate toward and out the nozzle 210 as an extruded fiber-matrix body 250.

The probe 120 includes the nozzle 210 mentioned above. The nozzle 210 may comprise an aperture fitted to an end of the sleeve 230 to receive fiber-matrix mixture from the cavity 235 and shape the fiber-matrix mixture into an extruded fiber-matrix body 250.

Adjacent to the probe 120, and as depicted in FIG. 1, a build plate 130 may support a workpiece 150. The extruded fiber-matrix body 250 may be pressed against the workpiece 150 and manipulated to cause at least a portion of the extruded fiber-matrix body 250 to integrate into the workpiece 150, thereby additively manufacturing features of the workpiece 150. For instance, an actuator, such as an electrical or hydraulic actuator, may be configured to move at least one of the build plate 130 and the probe 120 (e.g., via movement of mechanical arm 110) to weld at least a portion of the extruded fiber-matrix body 250 to the workpiece 150 on the build plate 130 via friction stir additive manufacturing.

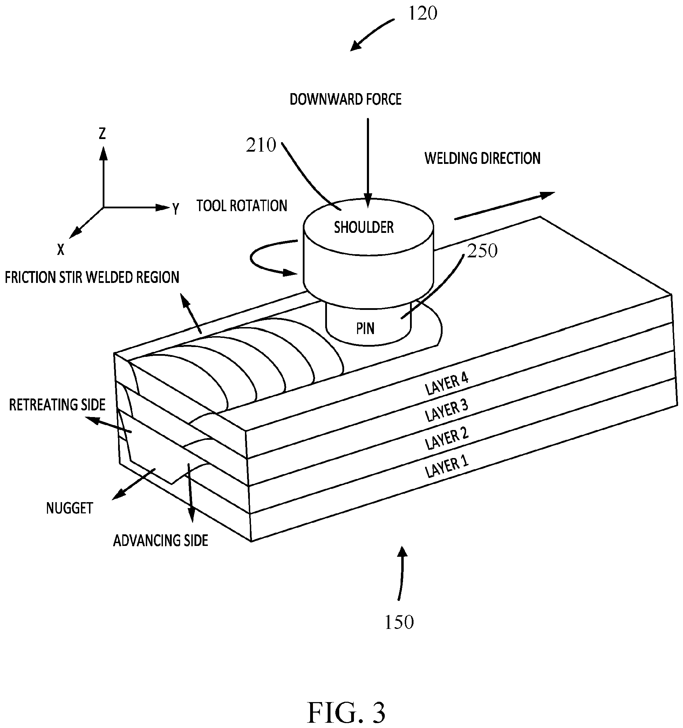

FIG. 3 depicts aspects of friction stir additive manufacturing. For instance, the probe 120 is shown having a nozzle 210. The nozzle 210 extrudes an extruded fiber-matrix body 250. The probe 120 having the nozzle 210 rotates and also presses the extruded fiber-matrix body 250 against a workpiece 150, causing at least a portion of the extruded fiber-matrix body 250 to be liberated from the nozzle 210 and bonded to the workpiece 150 in a layer. In various instances, the pressing and rotating causes plasticization and heating at the juncture of the extruded fiber-matrix body 250 and the workpiece 150, causing the extruded fiber-matrix body 250 to flow and unite with the workpiece 150 as a homogeneous structure. Accordingly, at least a portion of the extruded fiber-matrix body 250 may bond to the workpiece 150 forming the layer. The extruded fiber-matrix body 250 may be translated relative to the workpiece 150 and along a first direction. As material is liberated from the nozzle 210 and bonds to the workpiece 150 forming the layer, a boss may be formed from at least the portion of the extruded fiber-matrix body 250 along the first direction and on the workpiece 150 in response to the translating. Multiple layers may be formed by repeating the translating and rotating aspects until sufficient layers are bonded to create a boss or other feature of a desired size and shape.

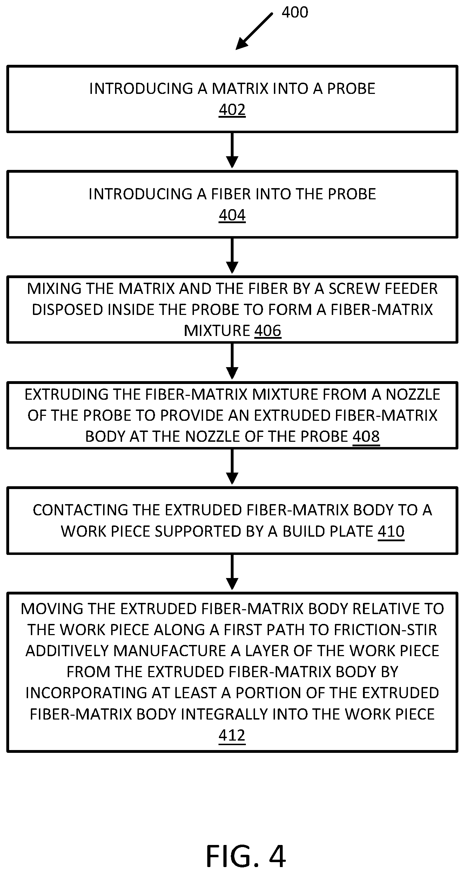

Directing attention now to FIG. 4, a method of additively manufacturing a composite component 400 via the systems and apparatuses disclosed herein is depicted. The method may include introducing a matrix into a probe (block 402). The method may also include introducing a fiber into the probe (block 404). A screw feeder disposed inside the probe may mix the matrix and the fiber to form a fiber-matrix mixture (block 406). The method may include extruding the fiber-matrix mixture from a nozzle of the probe to provide an extruded fiber-matrix body at the nozzle of the probe (block 408). The fiber-matrix body may be contacted to a workpiece supported by a build plate (block 410). The extruded fiber-matrix body may be moved relative to the workpiece along a first path to friction-stir additively manufacture a layer of the workpiece from the extruded fiber-matrix body by incorporating at least a portion of the extruded fiber-matrix body integrally into the workpiece (block 412).

In various instances of the method, the fiber is a chopped carbon fiber. Moreover, the extruded fiber-matrix body may at least partially harden prior to the contacting the extruded fiber-matrix body to the workpiece. In various instances, the moving the extruded fiber-matrix body relative to the workpiece comprises translating the build plate supporting the workpiece relative to the probe. The moving the extruded fiber-matrix body relative to the workpiece may also include rotating the probe relative to the workpiece. Thus, the moving the extruded fiber-matrix body relative to the workpiece may include rotating the probe relative to the workpiece while translating the build plate supporting the workpiece relative to the probe. At least one of the contacting and the moving generates heat causing the extruded fiber-matrix body and the workpiece to at least partially melt and weld together. The moving of the extruded fiber-matrix body may occur repeatedly relative to the workpiece and along the same first path to friction-stir additively manufacture subsequent layer(s).

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A method of additively manufacturing a composite component comprising:
introducing a polymer into a probe (120);
introducing a fiber into the probe;
mixing the polymer and the fiber by a screw feeder (220) disposed inside the probe to form a fiber-matrix mixture;
extruding the fiber-matrix mixture from a nozzle (210) of the probe to provide an extruded fiber-matrix body (250) at the nozzle of the probe;
contacting the extruded fiber-matrix body to a workpiece (150) supported by a build plate (130), wherein the extruded fiber-matrix body at least partially hardens prior to the contacting the extruded fiber-matrix body to the workpiece; and
moving the extruded fiber-matrix body relative to the workpiece to friction-stir additively manufacture a layer of the workpiece from the extruded fiber-matrix body by incorporating at least a portion of the extruded fiber-matrix body integrally into the workpiece to form the composite component.

2. The method according to claim 1, wherein the fiber is chopped carbon fiber.

3. The method according to claim 1 or 2, wherein the moving the extruded fiber-matrix body (250) relative to the workpiece (150) comprises:
translating the build plate (130) supporting the workpiece relative to the probe (120).

4. The method according to claim 1, 2 or 3, wherein the moving the extruded fiber-matrix body (250) relative to the workpiece (150) comprises:
translating the probe relative to the build plate supporting the workpiece.

5. The method according to any preceding claim, wherein the moving the extruded fiber-matrix body (250) relative to the workpiece (150) comprises:
rotating the probe relative to the workpiece.

6. The method according to any preceding claim, wherein the moving the extruded fiber-matrix body (250) relative to the workpiece (150) comprises:
rotating the probe relative to the workpiece while translating the build plate supporting the workpiece relative to the probe.

7. The method according to any preceding claim, wherein the moving the extruded fiber-matrix body (250) relative to the workpiece (150) comprises: rotating the probe (120) relative to the workpiece while translating the probe relative to the build plate (130) supporting the workpiece.

8. The method according to any preceding claim, wherein at least one of the contacting and the moving generates heat causing the extruded fiber-matrix body (250) and the workpiece (150) to at least partially melt and weld together.

9. The method according to any preceding claim, further comprising repeating the moving the extruded fiber-matrix body (250) relative to the workpiece (150) to friction-stir additively manufacture a subsequent layer atop the layer.

10. The method of additively manufacturing a composite component, according to claim 1, by an additive manufacturing system (100), the system including (i) a probe (120) including a sleeve (230) defining a cavity (235) and at least one inlet in fluid communication with the cavity to provide a carbon fiber and a polymer to the cavity, (ii) a screw feeder (220) disposed at least partially within the sleeve, and (iii) a nozzle (210), wherein the screw feeder is configured to rotate causing the carbon fiber and the polymer to mix to create a fiber-polymer mixture and to translate towards and out the nozzle as an extruded fiber-polymer body (250).

## Patentansprüche

1. Verfahren zur additiven Fertigung eines Verbundbauteils, umfassend:
Einbringen eines Polymers in eine Sonde (120);
Einbringen einer Faser in die Sonde;
Mischen des Polymers und der Faser durch eine innerhalb der Sonde angeordnete Schneckenzuführung (220) zur Bildung eines Faser-Matrix-Gemisches;
Extrudieren des Faser-Matrix-Gemisches aus einer Düse (210) der Sonde, um einen extrudierten Faser-Matrix-Körper (250) an der Düse der Sonde bereitzustellen;
In-Kontakt-Bringen des extrudierten Faser-Matrix-Körpers mit einem von einer Bauplatte (130) getragenen Werkstück (150), wobei der extrudierte Faser-Matrix-Körper vor dem In-Kontakt-Bringen des extrudierten Faser-Matrix-Körpers mit dem Werkstück zumindest teilweise aushärtet; und
Bewegen des extrudierten Faser-Matrix-Körpers relativ zum Werkstück, um durch Rührreibschweißen eine additive Fertigung einer Schicht des Werkstücks aus dem extrudierten Faser-Matrix-Körper vorzunehmen, indem zumindest ein Teil des extrudierten Faser-Matrix-Körpers integral in das Werkstück eingebracht wird, um das Verbundbauteil zu bilden.

2. Verfahren nach Anspruch 1, wobei die Faser aus gehackter Kohlenstofffaser besteht.

3. Verfahren nach Anspruch 1 oder 2, wobei das Bewegen des extrudierten Faser-Matrix-Körpers (250) relativ zum Werkstück (150) umfasst:
Verfahren der das Werkstück tragenden Bauplatte (130) relativ zur Sonde (120).

4. Verfahren nach Anspruch 1, 2 oder 3, wobei das Bewegen des extrudierten Faser-Matrix-Körpers (250) relativ zum Werkstück (150) umfasst:
Verfahren der Sonde relativ zu der das Werkstück tragenden Bauplatte.

5. Verfahren nach einem der vorhergehenden Ansprüche, wobei das Bewegen des extrudierten Faser-Matrix-Körpers (250) relativ zum Werkstück (150) umfasst:
Drehen der Sonde relativ zum Werkstück.

6. Verfahren nach einem der vorhergehenden Ansprüche, wobei das Bewegen des extrudierten Faser-Matrix-Körpers (250) relativ zum Werkstück (150) umfasst:
Drehen der Sonde relativ zum Werkstück bei gleichzeitigem Verfahren der das Werkstück tragenden Bauplatte relativ zur Sonde.

7. Verfahren nach einem der vorhergehenden Ansprüche, wobei das Bewegen des extrudierten Faser-Matrix-Körpers (250) relativ zum Werkstück (150) umfasst: Drehen der Sonde (120) relativ zum Werkstück bei gleichzeitigem Verfahren der Sonde relativ zu der das Werkstück tragenden Bauplatte (130).

8. Verfahren nach einem der vorhergehenden Ansprüche, wobei zumindest eines von dem In-Kontakt-Bringen und dem Bewegen Wärme erzeugt, die bewirkt, dass der extrudierte Faser-Matrix-Körper (250) und das Werkstück (150) zumindest teilweise schmelzen und miteinander verschweißt werden.

9. Verfahren nach einem der vorhergehenden Ansprüche, ferner umfassend das Wiederholen des Bewegens des extrudierten Faser-Matrix-Körpers (250) relativ zum
Werkstück (150), um durch Rührreibschweißen eine additive Fertigung einer nachfolgenden Schicht auf der Schicht vorzunehmen.

10. Verfahren zur additiven Fertigung eines Verbundbauteils nach Anspruch 1, durch ein additives Fertigungssystem (100), wobei das System (i) eine Sonde (120) umfassend eine Hülse (230), die einen Hohlraum (235) definiert, und mindestens einen Einlass in Fluidverbindung mit dem Hohlraum zur Zuführung einer Kohlenstofffaser und eines Polymers in den Hohlraum, (ii) eine zumindest teilweise innerhalb der Hülse angeordnete Schneckenzuführung (220), und (iii) eine Düse (210) umfasst, wobei die Schneckenzuführung dazu ausgebildet ist, sich zu drehen, um die Kohlenstofffaser und das Polymer zu einem Faser-Polymer-Gemisch zu vermischen, und sich in Richtung der Düse und aus dieser heraus als extrudierter Faser-Polymer-Körper (250) zu bewegen.

## Revendications

1. Procédé de fabrication additive d'un composant composite comprenant :
l'introduction d'un polymère dans une sonde (120) ;
l'introduction d'une fibre dans la sonde ;
le mélange du polymère et de la fibre par une vis d'alimentation (220) disposée à l'intérieur de la sonde pour former un mélange fibre-matrice ;
l'extrusion du mélange fibre-matrice depuis une buse (210) de la sonde pour fournir un corps fibre-matrice extrudé (250) au niveau de la buse de la sonde ;
la mise en contact du corps fibre-matrice extrudé avec une pièce à usiner (150) supportée par un plateau de fabrication (130), dans lequel le corps fibre-matrice extrudé durcit au moins partiellement avant la mise en contact du corps fibre-matrice extrudé avec la pièce à usiner ; et
le déplacement du corps fibre-matrice extrudé par rapport à la pièce à usiner pour fabriquer de manière additive par friction-malaxage une couche de la pièce à usiner à partir du corps fibre-matrice extrudé en incorporant au moins une partie du corps fibre-matrice extrudé de manière intégrale dans la pièce à usiner pour former le composant composite.

2. Procédé selon la revendication 1, dans lequel la fibre est une fibre de carbone hachée.

3. Procédé selon la revendication 1 ou 2, dans lequel le déplacement du corps fibre-matrice extrudé (250) par rapport à la pièce à usiner (150) comprend :
la translation du plateau de fabrication (130) supportant la pièce à usiner par rapport à la sonde (120).

4. Procédé selon la revendication 1, 2 ou 3, dans lequel le déplacement du corps fibre-matrice extrudé (250) par rapport à la pièce à usiner (150) comprend :
la translation de la sonde par rapport au plateau de fabrication supportant la pièce à usiner.

5. Procédé selon l'une quelconque des revendications précédentes, dans lequel le déplacement du corps fibre-matrice extrudé (250) par rapport à la pièce à usiner (150) comprend :
la rotation de la sonde par rapport à la pièce à usiner.

6. Procédé selon l'une quelconque des revendications précédentes, dans lequel le déplacement du corps fibre-matrice extrudé (250) par rapport à la pièce à usiner (150) comprend :
la rotation de la sonde par rapport à la pièce à usiner tout en effectuant la translation du plateau de fabrication supportant la pièce à usiner par rapport à la sonde.

7. Procédé selon l'une quelconque des revendications précédentes, dans lequel le déplacement du corps fibre-matrice extrudé (250) par rapport à la pièce à usiner (150) comprend :
la rotation de la sonde (120) par rapport à la pièce à usiner tout en effectuant la translation de la sonde par rapport au plateau de fabrication (130) supportant la pièce à usiner.

8. Procédé selon l'une quelconque des revendications précédentes, dans lequel au moins l'une de la mise en contact et du déplacement génère de la chaleur provoquant la fusion au moins partielle du corps fibre-matrice extrudé (250) et de la pièce à usiner (150) et leur soudage ensemble.

9. Procédé selon l'une quelconque des revendications précédentes, comprenant en outre la répétition du déplacement du corps fibre-matrice extrudé (250) par rapport à la pièce à usiner (150) pour fabriquer de manière additive par friction-malaxage une couche subséquente au-dessus de la couche.

10. Procédé de fabrication additive d'un composant composite, selon la revendication 1, par un système de fabrication additive (100), le système comprenant (i) une sonde (120) comprenant un manchon (230) définissant une cavité (235) et au moins une entrée en communication fluidique avec la cavité pour fournir une fibre de carbone et un polymère à la cavité, (ii) une vis d'alimentation (220) disposée au moins partiellement à l'intérieur du manchon, et (iii) une buse (210), dans lequel la vis d'alimentation est configurée pour tourner en provoquant le mélange de la fibre de carbone et du polymère pour créer un mélange fibre-polymère et pour effectuer une translation vers et hors de la buse sous forme d'un corps fibre-polymère extrudé (250).
